Europäisches Patentamt

European Patent Office

Office européen des brevets

(19)

(11) Numéro de publication : **0 337 831 B1**

(12) **FASCICULE DE BREVET EUROPEEN**

(45) Date de publication du fascicule du brevet :
**13.05.92 Bulletin 92/20**

(51) Int. Cl.$^5$ : **G01N 23/203**, G01N 9/24

(21) Numéro de dépôt : **89400777.2**

(22) Date de dépôt : **20.03.89**

(54) **Procédé et dispositif pour déterminer la masse volumique d'un volume élémentaire de matière.**

(30) Priorité : **06.04.88 FR 8804545**

(43) Date de publication de la demande :
**18.10.89 Bulletin 89/42**

(45) Mention de la délivrance du brevet :
**13.05.92 Bulletin 92/20**

(84) Etats contractants désignés :
**BE DE GB IT**

(56) Documents cités :
**FR-A- 2 116 263**
**FR-A- 2 582 810**
**US-A- 2 997 586**
**US-A- 3 439 166**
**US-A- 3 505 520**

(72) Inventeur : **Le Floc'h, Christian**
**Résidence Dulamon Bâtiment A - No 44**
**F-33290 Blanquefort (FR)**
Inventeur : **Babot, Daniel**
**47 avenue Galline**
**F-69100 Villeurbanne (FR)**
Inventeur : **Mazeron, Bernard**
**90, Chemin du Foin**
**F-33160 St-Aubin-de-Medoc (FR)**
Inventeur : **Peix, Gilles**
**25 rue Georges Courteline**
**F-69100 Villeurbanne (FR)**

(74) Mandataire : **Bonnetat, Christian et al**
**CABINET BONNETAT 23, Rue de Léningrad**
**F-75008 Paris (FR)**

(73) Titulaire : **AEROSPATIALE SOCIETE**
**NATIONALE INDUSTRIELLE Société**
**Anonyme dite:**
**37, Boulevard de Montmorency**
**F-75016 Paris (FR)**

EP 0 337 831 B1

Jouve, 18, rue Saint-Denis, 75001 PARIS

## Description

La présente invention a pour objet un dispositif pour déterminer la masse volumique d'un volume élémentaire de matière.

Quoique non exclusivement, l'invention est particulièrement adaptée à la réalisation d'un dispositif de contrôle non destructif permettant de suivre la progression d'un dépôt sur une paroi et/ou de mesurer une dimension ou une distance dans une ambiance où règnent des conditions rigoureuses.

A titre d'exemple particulier, l'invention peut être mise en oeuvre pour la surveillance d'un dépôt zinc-plomb sur les parois d'un haut-fourneau à zinc.

On connaît déjà un procédé pour obtenir une indication sur la masse volumique du contenu d'un volume élémentaire selon lequel :

– on définit ledit volume élémentaire comme l'intersection d'un faisceau directionnel de rayonnement X ou $\gamma$ et d'un canal de réception directionnel d'un détecteur photo-électronique de photons ;

– on rend ledit faisceau de rayonnement et/ou ledit canal de réception mobile(s) en rotation autour d'un axe orthogonal au plan défini par les axes dudit faisceau de rayonnement et dudit canal de réception ; et

– après amenée en coïncidence de ladite intersection avec ledit volume élémentaire par rotation dudit faisceau de rayonnement et/ou dudit canal de réception, on mesure le nombre des photons reçus par ledit détecteur.

Ainsi, comme cela sera expliqué plus en détail ci-après, ledit détecteur reçoit les photons diffusés par effet COMPTON dans la direction dudit détecteur par ledit faisceau de rayonnement traversant ledit volume élémentaire, c'est-à-dire que ledit détecteur fournit une information sur le nombre d'électrons contenus par ledit volume élémentaire et donc sur la masse volumique de ce dernier.

Le document US-A- 3 505 520 décrit un dispositif destiné à mesurer une quantité de matière incombustible et comportant notamment des moyens de réglage manuel de distance. Le document FR-A- 2 116 263 se rapporte à un appareil pour la détermination du niveau et du profil de la surface d'une substance et équipé d'une pluralité de détecteurs photo-électroniques directionnels orientables en commun.

Selon l'invention, le dispositif destiné à fournir une indication sur la masse volumique du contenu d'un volume élémentaire est défini selon les caractéristiques énoncées dans la partie caractérisante de la revendication 1.

Ainsi, grâce à l'invention, on peut aisément amener ledit volume élémentaire de mesure en tout emplacement désiré, ainsi que faire varier l'emplacement de ladite intersection.

Par suite, par la mise en oeuvre du dispositif selon l'invention, on peut :

a) mesurer la masse volumique du contenu dudit volume élémentaire, par exemple en comparant le débit des électrons délivré par le détecteur, au débit d'électrons délivré par le même détecteur lorsque, dans les mêmes conditions opératoires, le même faisceau de rayonnement traverse un volume élémentaire identique d'une matière étalon dont on connaît la masse volumique. En effet, on sait que le nombre des photons diffusés par effet COMPTON est directement proportionnel au nombre des électrons contenus dans ledit volume élémentaire, ce nombre d'électrons étant lui-même dans un rapport constant avec celui des nucléons dudit volume élémentaire. Ainsi, les deux débits comparés sont dans le même rapport que les masses volumiques comparées.

b) maintenir à un emplacement fixe ladite intersection et mesurer l'évolution dans le temps du débit des électrons délivré par ledit détecteur. On obtient alors des indications sur l'évolution de la masse volumique dudit volume élémentaire, par exemple en fonction du développement d'une réaction chimique ou d'un processus physique.

c) déplacer ladite intersection et mesurer pour une pluralité de positions de cette intersection, les débits d'électrons correspondants délivrés par ledit détecteur. On peut alors établir une véritable cartographie de la masse volumique de l'espace dans lequel est déplacée ladite intersection. De plus, lorsqu'au cours d'un tel déplacement, le débit d'électrons varie brusquement, cela signifie que l'on passe d'une matière dense à une matière peu dense ou vice-versa. On peut donc, grâce à une telle variation brusque du débit des électrons, déterminer la transition entre un objet dense et son environnement gazeux, c'est-à-dire en réalité déterminer la position dudit objet. On remarquera que le déplacement de ladite intersection peut être obtenu soit uniquement par rotation du faisceau de rayonnement et/ou du canal de réception, soit uniquement par déplacement relatif dudit objet par rapport audit faisceau de rayonnement et audit canal de réception, ou bien encore par une combinaison des deux.

Pour simplifier les montages mécaniques de la source, du détecteur et/ou de leur support, tout en ayant le maximum de possibilités d'examen, ou bien encore pour augmenter la rapidité et/ou la précision de la mesure, le dispositif peut comporter une pluralité de détecteurs photo-électroniques directionnels. A un instant donné, ces détecteurs peuvent converger vers le même point d'un faisceau unique de rayonnement émis par ladite source, ou vers des points différents de celui-ci. Par ailleurs, ladite source peut émettre plusieurs faisceaux de rayonnement et on peut associer un détecteur à chaque faisceau de rayonnement.

Dans un mode avantageux de réalisation, l'élément actif de la source de rayonnement (tube à rayons X, matière radioactive, ... ) et celui du détecteur (scintillateur) sont enfermés à l'intérieur d'un blindage massif comportant un conduit étroit, formant collimateur, reliant ledit élément actif à l'extérieur dudit blindage. Ce sont ces conduits étroits qui déterminent la section du faisceau directionnel de rayonnement et celle du canal directionnel de réception, et donc le volume élémentaire de matière examinée.

Suivant les applications envisagées pour le dispositif selon l'invention, de tels blindages massifs peuvent être en plomb, lorsque les conditions de températures du milieu ambiant sont normales, ou bien en uranium appauvri, en tungstène, ... lorsque les conditions de températures imposées auxdits blindages sont élevées.

Des obturateurs des conduits des blindages peuvent être prévus, pour isoler lesdits éléments actifs en dehors des périodes de mesure.

Si le dispositif selon l'invention est utilisé dans des ambiances dans lesquelles se trouvent des particules diverses (poussières, matières en suspension susceptibles de se déposer, ...), on peut prévoir un soufflage des orifices desdits conduits pour éviter le colmatage de ceux-ci et/ou le coincement desdits obturateurs.

Les figures du dessin annexé feront bien comprendre comment l'invention peut être réalisée. Sur ces figures, des références identiques désignent des éléments semblables.

La figure 1 illustre schématiquement, en perspective, le dispositif conforme à la présente invention.

Les figures 2, 3 et 4 illustrent schématiquement et respectivement trois applications de la présente invention.

La figure 5 montre schématiquement un mode de réalisation de la source et du détecteur du dispositif de la figure 1, en coupe selon la ligne V-V de cette dernière figure.

La figure 6 montre, en coupe partielle schématique, un haut fourneau dans lequel est installé un dispositif conforme à la présente invention.

La figure 7 est une coupe, à échelle agrandie, correspondant à la ligne VII-VII de la figure 6 et illustrant un mode de réalisation de l'ensemble source-détecteur.

La figure 8 illustre, en vue semblable à la figure 7, la source et le détecteur en position fermée.

Les figures 9 et 10 illustrent deux variantes de mise en oeuvre de la présente invention.

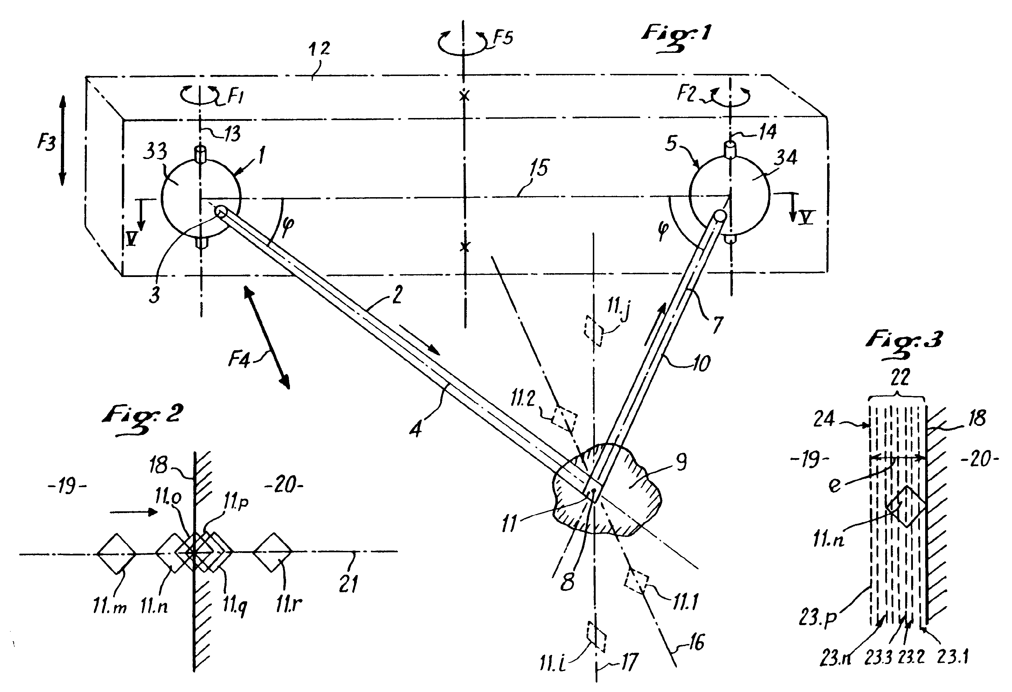

Le dispositif selon l'invention, montré schématiquement sur la figure 1, comporte une source 1 de rayonnement X ou γ émettant un faisceau directionnel 2 d'un tel rayonnement à travers sa fenêtre (collimateur) d'émission 3 d'axe 4, ainsi qu'un détecteur directionnel de photons 5 pourvu d'une fenêtre de réception 6 (collimateur) d'axe 7. Ladite source 1 et/ou ledit détecteur 5 sont montés mobiles, par exemple de la façon décrite ci-après, de façon que leurs axes 4 et 7 puissent être amenés à converger en un point 8, de position désirée. Sur la figure 1, on a supposé que ce point de convergence 8 se trouvait à l'intérieur d'un volume de matière 9.

Lorsque le faisceau directionnel 2 pénètre dans le volume de matière 9, ses photons choquent les électrons de ladite matière et, par effet COMPTON, des photons d'énergie moindre sont diffusés dans toutes les directions. Puisque la fenêtre de réception 6 est dirigée vers le point 8, le détecteur 5 est apte à recevoir ceux de ces photons diffusés par effet COMPTON qui ont une direction de propagation parallèle à l'axe 7 et qui se trouvent à l'intérieur d'un canal de réception virtuel 10, formé par la surface cylindrique dont la directrice est le contour de la fenêtre de réception 6 et dont la génératrice est parallèle à l'axe 7. Bien entendu, le contour de la fenêtre de réception 6 n'est pas forcément circulaire, de sorte que le terme "surface cylindrique" doit être pris dans son sens mathématique, qui englobe des surfaces dont la directrice peut être une ligne de différentes formes, et notamment polygonale (et encore plus spécialement rectangulaire ou carrée).

Ainsi, le détecteur 5 reçoit et compte tous les photons diffusés dans le canal de réception 10 et qui proviennent d'un volume élémentaire 11 de matière, déterminé par l'intersection du faisceau de rayonnement 2 et du canal de réception 10.

Le nombre des photons mesuré par le détecteur 5 est donc proportionnel au nombre des électrons contenus dans ledit volume élémentaire 11 et, puisque dans tous les éléments (excepté l'hydrogène) le nombre des électrons est dans un rapport voisin de 0,5 du nombre des nucléons, le nombre des photons compté par le détecteur 5 est représentatif de la masse volumique dudit volume élémentaire 11. Bien entendu, il est indispensable à cet effet qu'entre le volume élémentaire 11 et la fenêtre de réception 6, il ne se produise pas dans le canal de réception 10 de diffusion parasite de photons, ce qui est le cas si le volume élémentaire 11 est superficiel et si le canal de réception traverse un gaz, par exemple de l'air.

Ainsi, grâce à la présente invention, on peut effectuer une mesure non destructive et sans contact de la masse volumique de la matière du volume élémentaire 11 (appelé ci-après volume de mesure), que l'on peut positionner en n'importe quel point du volume de matière 9, grâce à la mobilité de la source de rayonnement 1 et du détecteur de photons 5.

Pour ce faire, ladite source de rayonnement 1 et le détecteur de photons 5 pourraient être rendus mobiles indépendamment l'un de l'autre, de toutes manières désirées, le seul impératif étant que les axes 4 et 7 puissent être amenés à converger en un point 8.

Toutefois, dans le mode de réalisation avantageux de la présente invention, la source de rayonnement 1 et le détecteur de photons 5 forment un ensemble solidaire 12, à l'intérieur duquel ladite source 1 et ledit détecteur sont montés rotatifs (voir les flèches F1 et F2) autour d'axes respectifs et parallèles 13 et 14, lesdits axes de rotation 13 et 14 étant orthogonaux au plan défini par l'axe 4 de la source 1 et par l'axe 7 du détecteur 5. Pour simplifier la localisation du volume élémentaire de mesure 11, l'écartement (symbolisé par la ligne en trait mixte 15 sur la figure 1) entre ladite source 1 et ledit détecteur 5 est maintenu constant et, de plus, les rotations de ceux-ci autour de leurs axes respectifs de rotation 13 et 14 sont couplées de façon que les angles d'inclinaison φ des axes 4 et 7 dans le plan qu'ils définissent soient symétriques. Enfin, l'ensemble solidaire 12 peut être prévu pour être déplacé, d'un bloc, parallèlement aux axes de rotation 13 et 14 (voir flèche F3) et/ou orthogonalement au plan défini par lesdits axes de rotation 13 et 14 (voir flèche F4).

Ainsi, pour une position déterminée de l'ensemble solidaire 12, si on fait tourner la source 1 et le détecteur 5 respectivement autour desdits axes de rotation 13 et 14, le volume élémentaire de mesure 11 prend différentes positions 11.1, 11.2, alignées sur la bissectrice 16 de l'angle formé par les axes 4 et 7. On remarquera que, si les angles d'inclinaison φ des axes 4 et 7 sont maintenus constants et que l'on déplace l'ensemble solidaire 12 orthogonalement aux axes de rotation 13 et 14 (flèche F4), ledit volume élémentaire de mesure 11 se déplace de même le long de la bissectrice 16 et peut prendre lesdites positions 11.1, 11.2.

Enfin, lorsque les angles d'inclinaison φ des axes 4 et 7 sont maintenus constants et que l'on déplace l'ensemble unitaire 12 parallèlement aux axes de rotation 13 et 14 (flèche F5), le volume élémentaire de mesure 11 se déplace le long d'une ligne 17 parallèle auxdits axes de rotation 13 et 14, pour prendre différentes positions 11.i, 11.j.

On voit donc que, éventuellement en combinant les déplacements précédemment décrits (ou certains d'entre eux), il est possible de positionner le volume élémentaire de mesure 11 en tout endroit désiré.

Sur la figure 2, on a illustré une première application de l'invention. On y a représenté une paroi 18 séparant deux milieux 19 et 20 de masses volumiques très différentes. Par exemple, le milieu 19 est peu dense et est constitué par un gaz, tel que l'air, tandis que le milieu 20 est un solide dense, c'est-à-dire comportant une grande densité d'électrons. De plus, on a supposé que le volume élémentaire de mesure 11 est déplacé le long d'une ligne 21 (qui est par exemple, la ligne 16 ou la ligne 17 ou une combinaison des deux), pour passer du milieu 19 au milieu 20 (ou inversement) en traversant la paroi 18. Lorsque le volume élémentaire de mesure 11 se trouve, dans le milieu 19, dans une position 11.m écartée de la paroi 18, le nombre des photons diffusés comptés par le détecteur est faible. Ce faible nombre de photons diffusés reste sensiblement constant jusqu'à ce que le volume élémentaire de mesure 11 atteigne une position 11.n pour laquelle il est juste au contact de la paroi 18. Le déplacement du volume élémentaire de mesure 11 se poursuivant, une partie grandissante de celui-ci traverse la paroi 18 (voir les positions 11.o et 11.p) pour pénétrer dans le milieu dense 20, de sorte que le nombre des photons diffusés comptés par le détecteur 5 croît. Lorsque le volume élémentaire de mesure 11 atteint la position 11.q, il est complètement à l'intérieur du milieu dense 20, de sorte que le nombre de photons diffusés comptés par le détecteur 5 est important. Ce nombre reste sensiblement constant si le volume élémentaire de mesure 11 prend une position 11.r, écartée de la paroi 18, mais proche de celle-ci.

Pour les besoins de l'explication du phénomène, on a représenté schématiquement sur la figure 2 un volume de mesure 11 relativement important. En réalité, puisque ce volume élémentaire de mesure 11 résulte de l'intersection du faisceau de rayonnement collimaté 2 et du canal de réception 10 également collimaté, il est très petit et la transition entre les positions 11.n et 11.q (pour lesquelles ce volume élémentaire de mesure 11 est adjacent à la paroi 18 mais de part et d'autre de celle-ci) est très rapide. Par suite, le nombre des photons diffusés comptés par le détecteur 5 passe pratiquement sans transition d'une valeur faible (ou nulle) à une valeur élevée. Bien entendu, si le déplacement avait lieu du milieu 20 vers le milieu 19, de façon réciproque, le nombre desdits photons passerait pratiquement instantanément d'une valeur élevée à une valeur nulle.

Par suite, le brusque changement de valeur du nombre des photons diffusés comptés par le détecteur 5 est caractéristique du franchissement de la paroi de séparation 18. Il permet donc d'en détecter la position. De plus, en repérant la position de l'ensemble solidaire 12 et/ou la valeur des angles d'inclinaison φ des axes 4 et 7 correspondant à ce brusque changement de valeur du nombre des photons diffusés comptés par le détecteur 5, on peut mesurer la distance de la paroi de séparation 18, à partir d'une position initiale.

La figure 3 illustre une seconde application de l'invention. Sur cette figure 3, on retrouve les deux milieux 19 et 20 précédents, séparés par la paroi 18. Dans ce cas, on suppose qu'un dépôt 22 de matière dense est susceptible de se former progressivement, couche mince par couche mince, sur ladite paroi 18 du côté du milieu peu dense 19 et on désire suivre l'évolution dans le temps de ce dépôt. A cet effet, le volume élémentaire de mesure 11 est amené dans la position 11.n, pour laquelle il est adjacent à la paroi 18, du côté du milieu peu dense 19 et il est maintenu dans cette position pendant toute la mesure.

Initialement, c'est-à-dire avant commencement de la formation du dépôt 22, le volume élémentaire de mesure 11 est environné du milieu peu dense 19, de sorte que le nombre des photons diffusés donnés par le détecteur 5 est très faible, sinon nul. Lorsqu'une première couche mince 23.1 du dépôt 22 s'est formée, une partie du volume élémentaire de mesure 11 est emplie par celle-ci, de sorte que le nombre des photons diffusés comptés par le détecteur 5 croît. Au fur et à mesure de la formation des couches minces successives 23.1, 23.2, 23.3,... 23.n du dépôt dense 22 le nombre des photons diffusés continue de croître. Par suite, la variation dudit nombre de photons permet de suivre l'évolution de la formation des couches 23.i du dépôt 22. Lorsque le volume élémentaire de mesure 11 est totalement empli par le dépôt 22 (couche 23.n) et que des couches supplémentaires de dépôt 23.p continuent à se former, ces couches supplémentaires 23.p entraînent une atténuation du faisceau de rayonnement incident 2 et du faisceau de photons diffusés suivant le canal de réception 10. Par suite, le nombre des photons comptés par le détecteur 5 diminue. Ainsi, au cours de la mesure, ce nombre de photons comptés croît, passe par un maximum, puis décroît.

La vitesse de croissance et de décroissance dudit nombre de photons comptés est représentative de la vitesse de formation du dépôt 22 et de sa densité.

Bien entendu, si, à un moment, on désire connaître la position de la surface libre 24 du dépôt 22 dans le milieu 19, on peut opérer de la façon décrite en regard de la figure 2. Le déplacement du volume élémentaire de mesure 11 est alors représentatif de l'épaisseur e du dépôt 22.

Dans les deux applications décrites ci-dessus en regard des figures 2 et 3, il se produit des circonstances pour lesquelles le volume élémentaire de mesure 11 est partiellement ou totalement vide de matière dense 20, puisque se trouvant totalement ou partiellement dans le milieu peu dense 19. Il est avantageux que celui-ci soit choisi (gaz tel que l'air par exemple) de façon que le nombre des photons comptés par le détecteur 5 soit proportionnel à la proportion de milieu dense 20 emplissant ledit volume élémentaire de matière, c'est-à-dire que ledit milieu peu dense 19 entraîne une diffusion de photons pouvant être considérée comme nulle. Ainsi, la sensibilité théorique du dispositif selon l'invention dépend uniquement de conditions géométriques. On remarquera que, de plus, cette sensibilité est indépendante de l'énergie du rayonnement du faisceau 2.

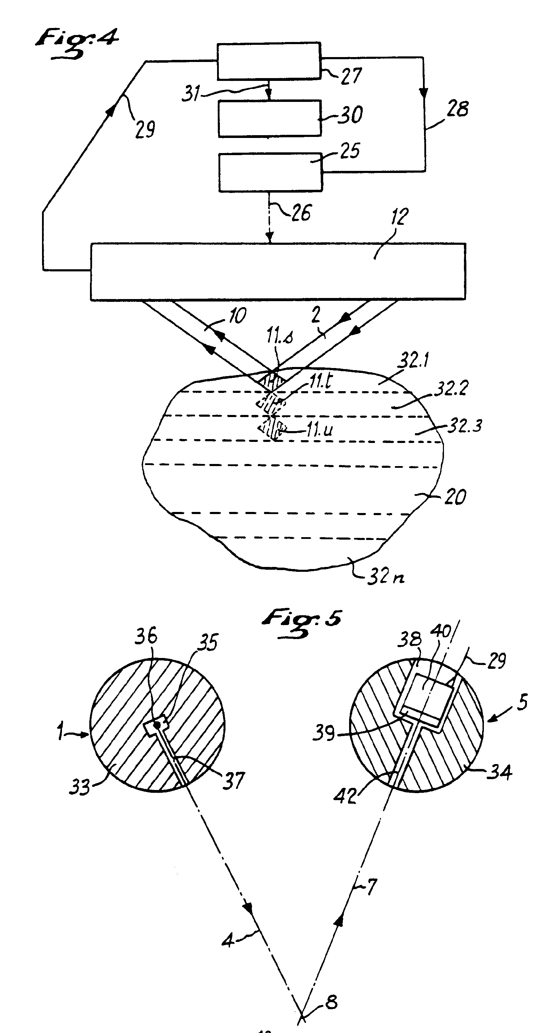

Dans l'application illustrée par la figure 4, l'invention est mise en oeuvre pour mesurer la masse volumique d'un volume de matière dense 20. Sur cette figure, on a prévu un robot 25 pour déplacer l'ensemble solidaire 12 et/ou orienter la source 1 et le détecteur 5 (liaison 26). Le robot 25 est commandé par un microprocesseur 27 (liaison 28) qui reçoit les informations de comptage du détecteur 5 (liaison 29). Un dispositif de traitement des données et des résultats 30 reçoit les informations du microprocesseur 27 (liaison 31). Dans ce cas, on opère tranche par tranche.

On procède tout d'abord à l'examen d'une tranche superficielle 32.1, en y plaçant le volume élémentaire de mesure 11, qui prend alors la position 11.s et on détermine la masse volumique du volume 11.s, par exemple par référence à la masse volumique d'une matière étalon préalablement mise à la place de la matière dense 20 et examinée dans les mêmes conditions. Si l'on considère que ladite tranche superficielle 32.1 est homogène, on en connaît maintenant la masse volumique en tout emplacement. Sinon, on examine ladite tranche superficielle 32.1 point par point en y déplaçant le volume élémentaire de mesure 11. On peut alors passer à l'examen de la tranche sous-jacente 32.2. Le résultat de la mesure de cette tranche sous-jacente 32.2 dépendra non seulement de la masse volumique au volume de mesure 11.t, mais également de l'atténuation subie par les photons qui traversent la première tranche 32.1 aussi bien pour le faisceau incident 2 que le long du faisceau diffusé 10. Cette atténuation fausse bien entendu le résultat de la mesure, mais la masse volumique du milieu étant déjà connue en tout point de la première tranche, il est possible d'en tenir compte lors de l'examen de la seconde tranche et corriger le résultat. On peut ainsi obtenir la masse volumique de la masse 20 en tout point de la tranche 32.2. Il est alors possible de passer à l'examen d'une troisième tranche, en tenant compte de l'atténuation tout au long de la traversée des deux premières, etc.

D'une manière générale, le calcul montre que la mesure du nombre des photons diffusés par une tranche 32.j. est liée à la mesure du nombre des photons diffusés par la tranche 32.i précédente par une formule de récurrence faisant intervenir l'épaisseur desdites tranches, l'angle d'incidence du faisceau 2 et le coefficient d'absorption linéaire équivalent de ladite tranche 32.j. On peut donc déterminer ledit coefficient d'absorption linéaire équivalent et, à partir de lui, la masse volumique de la tranche 32.j concernée.

Dans ce cas d'application, le calculateur 27 est indispensable pour stocker les résultats et effectuer les calculs nécessaires.

Dans le mode de réalisation de la source 1 et du détecteur 5 donné à titre d'exemple et représenté schématiquement en coupe sur la figure 5, on prévoit des blindages sphériques 33 et 34 pour chacun de ceux-ci. Ce sont ces blindages qui sont montés rotatifs autour des axes de rotation 13 et 14. Les blindages sont constitués de sphères massives, par exemple réalisées en uranium appauvri, en tungstène, en matière céramique dopée, etc. de manière à résister à des températures élevées (application aux hauts-fourneaux), tout en présentant une section efficace de capture importante pour les photons. Eventuellement, on peut prévoir un système de refroidissement desdits blindages, par exemple à circulation de fluide. Dans le cas où, dans l'application envisagée, les blindages 33 et 34 ne sont pas soumis à des températures élevées, ils peuvent être réalisés en plomb ou en une matière composite dopée.

Le blindage sphérique 33 comporte un évidement central 35, à l'intérieur duquel est disposé l'élément actif 36 générateur du rayonnement X ou γ. Cet élément actif peut par exemple être un tube à rayons X, présentant une haute tension très stable et un fort débit, de manière à réduire les incertitudes statistiques. L'élément actif 36 peut également être une source radioactive de fort débit et de période adéquate, comme par exemple une source de Cobalt 60. L'évidement central 35 communique avec l'extérieur par un conduit étroit 37 dont l'axe est confondu avec l'axe 4, ce conduit 37 faisant office de collimateur délimitant le faisceau de rayonnement 2.

Le blindage sphérique 34 du détecteur 5 comporte un évidement 38 servant de logement à l'élément actif de réception. Celui-ci se compose par exemple d'un scintillateur 39, par exemple en iodure de sodium dopé au thallium, auquel est associé un photomultiplicateur 40, pour en recueillir les photons et les transformer en impulsions électriques. Les impulsions électriques de sortie du photomultiplicateur sont adressées par une liaison 41 à une chaîne électronique d'acquisition et de traitement, de type connu par l'homme de l'art et non représentée. Le scintillateur 39 reçoit les photons à travers un conduit étroit 42, dont l'axe est confondu avec l'axe 7 et qui fait office de collimateur pour déterminer la section du canal de réception 10.

Les conduits étroits 37 et 42, qui délimitent respectivement le faisceau 2 et le canal de réception 10, déterminent le volume élémentaire de mesure 11, qui est l'intersection de ceux-ci. Les blindages sphériques 33 et 34 permettent d'arrêter les photons parasites qui ne suivent pas le guidage imposé par les conduits 37 et 42. Le bruit de fond du dispositif selon l'invention est donc faible.

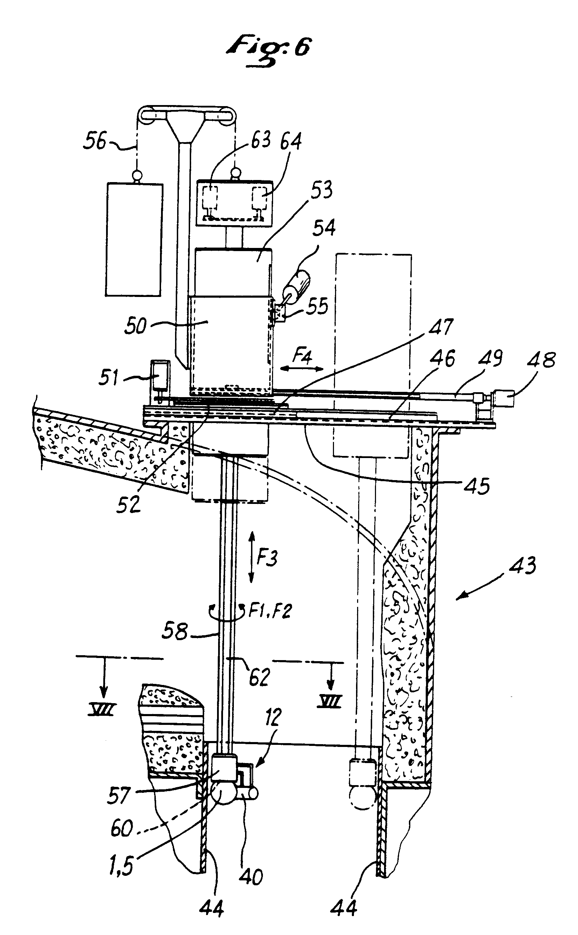

On remarquera, comme cela sera montré notamment en regard des figures 6 et 7, que la forme sphérique des blindages 33 et 34 est avantageuse pour obtenir les degrés de liberté qui leur sont nécessaires.

Sur la figure 6, on a représenté, partiellement en coupe verticale, un haut fourneau à zinc 43, pour lequel on désire surveiller l'évolution du dépôt zinc-plomb sur une paroi 44, par exemple cylindrique. Le dispositif représenté est monté à travers une ouverture 45 du haut fourneau 43. Il comprend :

– des rails de guidage 46, fixés audit haut fourneau 43 ;

– un chariot 47, pouvant coulisser le long des rails de guidage 46, sous l'action d'un moteur 48 et d'une transmission 49 ;

– un fourreau 50 monté rotatif autour d'un axe vertical sur ledit chariot 47, l'orientation dudit fourreau 50 étant commandée par un moteur 51 et une transmission 52 ;

– un noyau 53 pouvant coulisser verticalement à l'intérieur du fourreau 50 sous l'action d'un moteur 54 et d'une transmission 55, un ensemble solidaire 12 étant suspendu audit noyau 53 pour se trouver en regard de la paroi 44 à surveiller ; et

– un ensemble d'équilibrage 56 à contrepoids, pour équilibrer le noyau 53 et l'ensemble solidaire 12.

Comme le montre la figure 7, cet ensemble solidaire 12 comporte un support commun 57 pour la source 1 et le détecteur 5 et il est suspendu au noyau 53 par l'intermédiaire d'une colonne 58. Le support 57 comporte des empreintes sphériques 59, 60, respectivement pour servir de moyeu d'axe vertical aux sphères 33 et 34 de la source 1 et du détecteur 5. Lesdites sphères 33 et 34 sont respectivement solidaires d'arbres verticaux 61, 62 (d'axes respectifs 13 et 14) reliés à des moteurs 63, 64, montés sur ledit noyau 53.

Ainsi,

– grâce aux moteurs 63, 64 et aux arbres 61, 62, la source 1 et le détecteur 5 peuvent tourner autour de leurs axes de rotation 13 et 14 respectifs (Flèches F1 et F2) ;

– grâce au moteur 54 et à la transmission 55, l'ensemble solidaire 12 peut être déplacé verticalement en translation (Flèche 3) ; et

– grâce au moteur 48 et à la transmission 49, l'ensemble solidaire 12 peut être déplacé horizontalement (Flèche 4).

La paroi 44 peut donc être examinée par le dispositif de l'invention suivant l'une ou plusieurs des méthodes décrites ci-dessus, notamment en regard des figures 2 et 3.

On remarquera de plus que, grâce au moteur 51 et à la transmission 52, l'ensemble solidaire 12 peut tourner d'un bloc autour de l'axe 65 de la colonne 58, cet axe 65 étant parallèle aux axes 13 et 14 (voir la flèche F5 sur la figure 1).

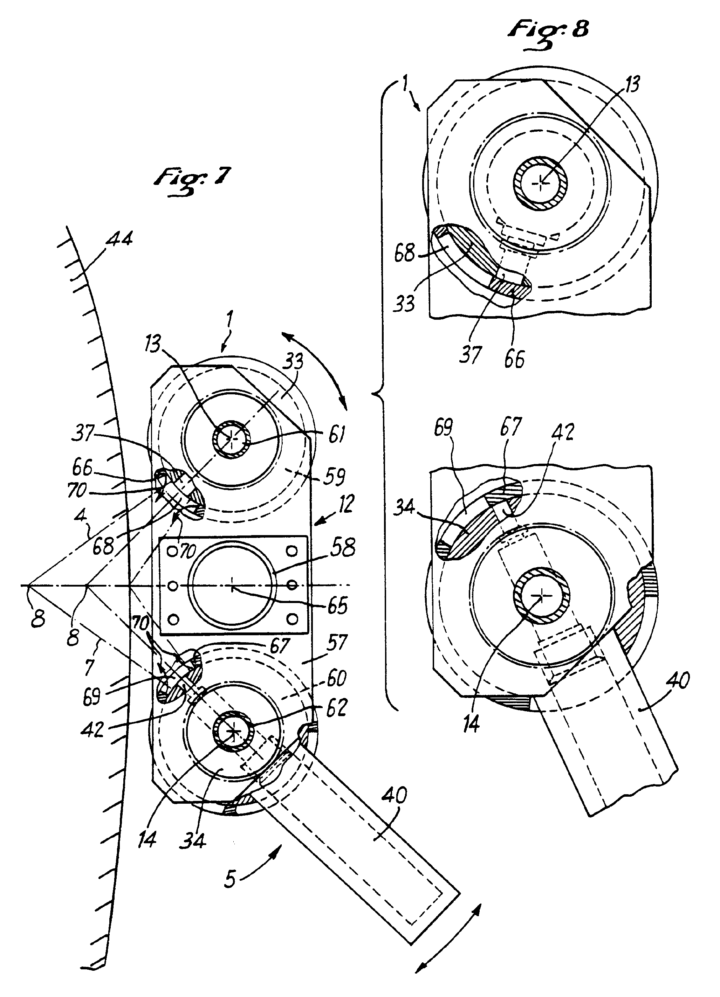

Comme le montrent les figures 7 et 8, chaque sphère 33 et 34 de la source 1 et du détecteur 5 est associée à une enveloppe blindée 66 ou 67, dans laquelle est ménagée une ouverture 68 ou 69 pour le faisceau 4 ou le canal de réception 10. Ainsi, par un mouvement relatif de la sphère 33 (ou 34) et de l'enveloppe blindée 66 (ou 67) associée, il est possible d'occulter les collimateurs 37 et 42 de la source 1 et du récepteur 5, soit pour le transport de ceux-ci, soit en dehors d'une période de mesure. Sur la figure 7, on a illustré une phase de mesure, les collimateurs 37 et 42 étant en regard des ouvertures 68 et 69 respectives. En revanche, sur la figure 8, le dispositif est au repos, les collimateurs 37 et 42 étant occultés par les enveloppes blindées 66 et 67.

Il peut être avantageux de prévoir des jets d'air comprimé (schématisés sur la figure 7 par des flèches 70) pour lécher les ouvertures 68 et 69 afin d'éviter la formation de tout dépôt qui pourrait entraîner une perturbation de mesure, ou empêcher le déplacement relatif des sphères 33, 34 et des enveloppes 66, 67.

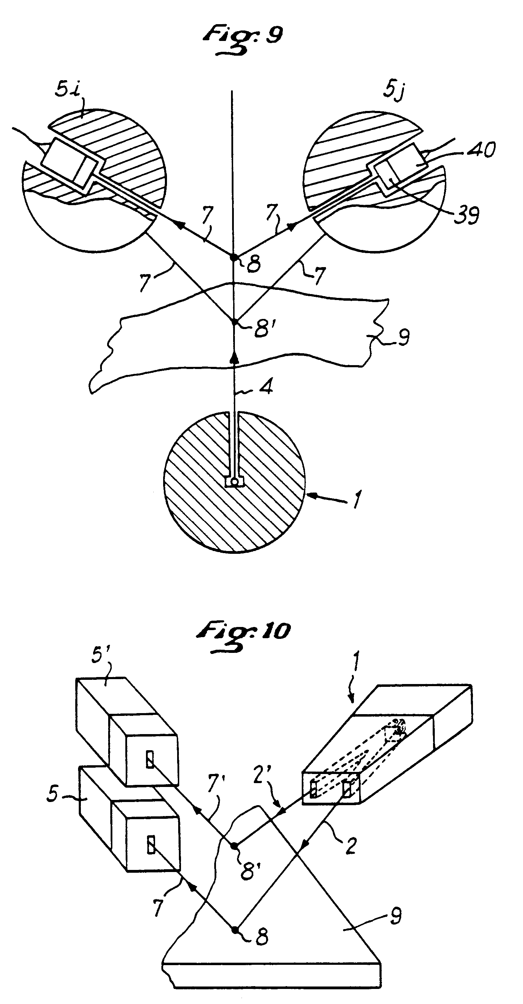

Dans la variante de réalisation du dispositif selon l'invention montrée par la figure 9, on prévoit une pluralité de détecteurs 5i, 5j, par exemple répartis en couronne autour de l'axe 4 du faisceau de rayonnement émis par la source 1. Les détecteurs 5i, 5j sont orientables individuellement et/ou en commun. Ainsi, ils peuvent être tous orientés simultanément vers le même point 8, ce qui permet d'augmenter la précision de la mesure (et ils sont dans ce cas reliés de préférence à la même chaîne de comptage), ou bien être simultanément orientés vers des points 8, 8',... différents de l'axe 4. Dans ce dernier cas, la mesure de la masse volumique le long de l'axe 4 peut être réalisée en une seule opération.

Comme le montre la figure 10, la source 1 peut également émettre plusieurs faisceaux de rayonnements 2, 2' (par exemple par collimatage adéquat) et à chacun de ces faisceaux peut être associé un détecteur 5, 5'. Dans ce cas également, on peut réaliser simultanément la mesure de la masse volumique d'une matière 9 en différents points 8, 8' de celle-ci.

## Revendications

1. Dispositif destiné à fournir une indication sur la masse volumique du contenu d'un volume élémentaire (11), comportant une source (1) directionnelle de rayonnement X ou γ et un détecteur (5) directionnel photo-électronique de photons, ladite source et/ou ledit détecteur étant montés rotatifs sur un support commun (57), autour d'un axe (13 ou 14) orthogonal au plan défini par l'axe (4) du faisceau de rayonnement (2) émis par ladite source (1) et par l'axe (7) du canal de réception (10) dudit détecteur (5), caractérisé en ce qu'il comporte des moyens de guidage et des moyens moteurs (46 à 49) pour déplacer ledit support commun (57) suivant une direction (F4) orthogonale à l'axe de rotation (13,14) de ladite source et/ou dudit détecteur, ainsi que des moyens de guidage et des moyens moteurs (50, 53 à 55) pour déplacer ledit support commun (57) suivant une direction (F3) parallèle à l'axe de rotation (13,14) de ladite source (1) et/ou dudit détecteur (5).

2. Dispositif selon la revendication 1, caractérisé en ce qu'il comporte une pluralité de détecteurs photo-électronique (5i,5j) directionnels montés rotatifs sur ledit support commun (57).

3. Dispositif selon la revendication 2, caractérisé en ce que lesdits détecteurs photo-électroniques (5i,5j) directionnels sont orientables individuellement.

4. Dispositif selon la revendication 2, caractérisé en ce que lesdits détecteurs photo-électroniques (5i,5j) directionnels sont orientables en commun.

5. Dispositif selon la revendication 2, caractérisé en ce que ladite source (1) émet une pluralité de faisceaux de rayonnement et en ce que chaque détecteur est associé à l'un desdits faisceaux.

6. Dispositif selon l'une quelconque des revendications 1 à 5, caractérisé en ce que l'élément actif (36) de la source de rayonnement est enfoncé à l'intérieur d'un blindage massif (33) comportant un conduit étroit (37), formant collimateur et reliant ledit élément actif (36) à l'extérieur du blindage (33).

7. Dispositif selon l'une quelconque des revendications 1 à 5, caractérisé en ce que l'élément actif (39) du détecteur (5) est enfermé à l'intérieur d'un blindage massif (34) comportant un conduit étroit (42), formant collimateur et reliant ledit élément actif (39) à l'extérieur dudit blindage (34).

8. Dispositif selon l'une quelconque des revendications 6 ou 7, caractérisé en ce que ledit blindage massif (33 ou 34) présente une forme sphérique.

## Patentansprüche

1. Vorrichtung zum Erzeugen einer Anzeige über die Dichte des Inhalts eines Elementarvolumens (11) mit einer ausgerichteten Quelle (1) von Röntgen- oder Gammastrahlung und einem ausgerichteten photoelektronischen Empfänger (5) für Photonen, wobei die besagte Quelle und/oder der besagte Empfänger drehbar um eine orthogonal zur von der Achse (4) des von der besagten Quelle (1) emittierten Strahlenbündels (2) und von der Achse (7) des Empfangskanals (10) des besagten Empfängers (5) definierten Ebene ausgerichteten Achse (13 oder 14) auf einem gemeinsamen Träger (57) angebracht sind, dadurch gekennzeichnet, daß sie Führungsmittel und Motormittel (46 bis 49) zum Verschieben des gemeinsamen Trägers (57) gemäß einer zur Drehachse (13, 14) der besagten Quelle und/oder des besagten Empfängers orthogonalen Richtung (F4) aufweist, ebenso wie Führungsmittel und Motormittel (50, 53 bis 55) zum Verschieben des gemeinsamen Trägers (57) gemäß einer zur Drehachse (13, 14) der besagten Quelle (1) und/oder des besagten Empfängers (5) parallelen Richtung (F3).

2. Vorrichtung gemäß Anspruch 1, dadurch gekennzeichnet, daß sie eine Vielzahl von ausgerichteten photo-elektronischen Empfängern (5i, 5j) aufweist, die drehbar auf dem gemeinsamen Träger (57) angebracht sind.

3. Vorrichtung nach Anspruch 2,

dadurch gekennzeichnet, daß die besagten ausgerichteten photoelektronischen Empfänger (5i, 5j) einzeln einstellbar sind.

4. Vorrichtung nach Anspruch 2,
dadurch gekennzeichnet, daß die besagten ausgerichteten photoelektronischen Empfänger (5i, 5j) gemeinsam einstellbar sind.

5. Vorrichtung nach Anspruch 2,
dadurch gekennzeichnet, daß die besagte Quelle (1) eine Vielzahl von Strahlenbündel emittiert, und daß jeder Empfänger einem dieser Strahlenbündel zugeordnet ist.

6. Vorrichtung nach einem der Ansprüche 1 bis 5,
dadurch gekennzeichnet, daß das aktive Element (36) der Strahlenquelle im Innern einer massiven Abschirmung (33) mit einem einen Kollimator bildenden und das besagte aktive Element (36) mit dem Äußeren der Abschirmung (33) verbindenden, engen Kanal (37) versenkt ist.

7. Vorrichtung nach einem der Ansprüche 1 bis 5,
dadurch gekennzeichnet, daß das aktive Element (39) des Empfängers (5) im Innern einer massiven Abschirmung (34) mit einem einen Kollimator bildenden und das besagte aktive Element (39) mit dem Äußeren der Abschirmung (34) verbindenden, engen Kanal (42) eingeschlossen ist.

8. Vorrichtung nach einem der Ansprüche 6 oder 7,
dadurch gekennzeichnet, daß die massive Abschirmung (33 oder 34) eine Kugelform aufweist.

detectors (5i,5j) are orientable individually.

4. Device according to claim 2,
characterized in that said photoelectronic directional detectors (5i,5j) are orientable together.

5. Device according to claim 2,
characterized in that said source (1) emits a plurality of radiation beams and in that each detector is associated with one of said beams.

6. Device according to any one of claims 1 to 5,
characterized in that the active element (36) of said radiation source is fitted inside a solid screen (33) comprising a narrow duct (37) forming a collimator and connecting said active element (36) to the outside of the screen (33).

7. Device according to any one of claims 1 to 5,
characterized in that the active element (39) of said detector (5) is fitted inside a solid screen (34) comprising a narrow duct (42) forming a collimator and connecting said active element (39) to the outside of the screen (34).

8. Device according to any one of claims 6 or 7,
characterized in that said solid screen (33 or 34) has a spherical shape.

## Claims

1. Device for delivering an indication about the mass per unit volume of the contents of an elementary volume (11), comprising a directional X or gamma radiation source (1) and a directional photoelectronic photon detector (5), said source and/or said detector being mounted for rotation on a common support (57), about an axis (13 or 14) orthogonal to the plane defined by the axis (4) of the radiation beam (2) emitted by said source (1) and by the axis (7) of the reception channel (10) of said detector (5),
characterized in that it comprises guiding means and driving means (46 to 49) for moving said common support (57) in a direction (F4) orthogonal to the axis of rotation (13,14) of said source and/or of said detector, as well as guiding means and driving means (50,53 to 55) for moving said common support (57) in a direction (F3) parallel to the axis of rotation (13,14) of said source (1) and/or of said detector (5).

2. Device according to claim 1,
characterized in that it comprises a plurality of directional photoelectronic detectors (5i,5j) mounted for rotation on said common support (57).

3. Device according to claim 2,
characterized in that said directional photoelectronic

*Fig. 1*

*Fig. 2*

*Fig. 3*

EP 0 337 831 B1

EP 0 337 831 B1

Fig:4

Fig:5

10

*Fig. 6*

EP 0 337 831 B1

Fig. 8

Fig. 7

12

Fig. 9

Fig. 10